# EUROPEAN PATENT APPLICATION

(11) **EP 1 307 009 A1**
(43) Date of publication of application: **02.05.2003**
(21) Application number: 01308988.3
(22) Date of filing: 23.10.2001
(51) Int. Cl.: H04L 12/56, H04Q 7/38

(54) **A method of selecting and switching from an uplink and downlink channel combination**

(71) Applicant: LUCENT TECHNOLOGIES INC., Murray Hill, New Jersey 07974-0636 (US)
(72) Inventor: Chen, Xiaoboa, Swindon, Wiltshire SN5 5DQ (GB); Richards, Derek, Swindon, Wiltshire SN6 6LL (GB); Falaki, Hamid, Swindon, Wiltshire SN5 5AA (GB)
(74) Representative: Sarup, David Alexander

(57) **Abstract**

In a method of selecting an uplink and downlink channel combination for use in a call connection in a telecommunications network involving transmission of data packets, data for transmission is stored in a buffer so as to be output in a controlled manner as data packets for transmission. The channel combination is selected dependent upon a characteristic of the data stored in the buffer.

## Description

### Technical Field

The present invention relates to a method of selecting an uplink and downlink channel combination for use in a call connection in a telecommunications network involving transmission of data packets, a method of switching from a first uplink/downlink channel combination to a second uplink/downlink channel combination during a call connection in a telecommunications network involving transmission of data packets and a telecommunications network comprising a channel combination selector.

### Background of the Invention

Flexible and effective resource management have been essential in providing quallity of service (QoS) while maintaining efficient resource utilisation. This is particularly important in wireless networks such as in Universal Mobile Telecommunications System UMTS networks where the accessibility and availability of radio resources vary from time and time and may cause great control complexity and difficulty in maintaining QoS whilst ensuring efficient utilisation of resources. This is, in particular, the case for the management of radio resources. The situation is made even more complicated when the traffic pattern is bursty, i.e. the amount of traffic arrives at a varying rate. This unevenness of traffic behaviour is typical of services such as services using compression coding schemes and Internet data access such as web browsing.

Known radio resource management schemes only allow for fixed channel allocation during radio access bearer (i.e. channel) establishment based on certain QoS requirements and some implementation constraints such as control complexity and cost.

During data sessions (i.e. call connections), traffic may not be sent continuously across the UMTS channels due to a user pausing in her/his speech, call holding or other deliberate stops in transmission, or neglect on the part of the network. This means that UMTS bearers (e.g. radio channels) are sometimes occupied without being used because existing radio resource management mechanisms have made a selection and configuration of resources that is static, not adapting to the changes in the traffic behaviour and transmission patterns which occur due to intermittent pauses or silence periods. As a result, a user has to pay the cost of occupying the radio channel even though it is not used while some new call requests have to be rejected due to a lack of available resources. This also limits the flexibility of operators to dynamically change or re-configure resources to enable service differentiation such as "Pay only as you talk", "Pay-less or no pay as you are quiet" Moreover the existing non-adaptive existing resource management mechanisms may fail to handover due to the lack of resource availability or simply due to a lack of flexibility of resource management.

### Summary of the Invention

The present invention provides a method of selecting an uplink and downlink channel combination for use in a call connection in a telecommunications network involving transmission of data packets, data for transmission being stored in a buffer so as to be output in a controlled manner as data packets for transmission, the channel combination being selected dependent upon a characteristic of data stored in the buffer.

Advantages of the present invention in its preferred embodiments are that selection and dynamic transitions between radio channel combinations such as RACH/FACH, CPCH/FACH, DCH/DSCH and DCH/DCH so as to adapt to the changes in the traffic behaviour during an active GPRS/UMTS session are enabled . This is by "shaping" the traffic behaviour so that selection of and transitions between, radio channel combinations are facilitated. Burstiness in traffic behaviour may otherwise cause low efficiency of channel utilisation if uncontrolled reducing the network performance and increasing running costs.

Preferred embodiments of the invention combine dynamic radio channel selection with traffic shaping to improve the radio resource utilisation in UTRAN or other 3G radio access networks. This advantageously provides the benefits to service providers and network operators of improved utilisation of costly radio resources and reduced running costs of networks and the services.

Preferably the characteristic is the amount of data in the buffer.

Preferably a combination of shared channels is selected when there is less than a threshold amount of data in the buffer.

Preferably a combination of dedicated channels is selected when there is more than a threshold amount of data in the buffer.

Preferably data is accumulated in the buffer until at least a threshold amount of data is accumulated then data is output at regular intervals by the buffer as data packets for transmission until the amount of data in the buffer becomes below a threshold. Alternatively preferably the buffer outputs at regular intervals any data accumulated as data packets for transmission. Alternatively preferably data is accumulated in the buffer, and data packets are output from the buffer for transmission upon sufficient credit being accrued, credit being allocated according to a predetermined rule.

Preferably data of different quality of service classes are buffered separately so as to select a channel combination for transmission of data packets dependent upon quality of service class. The selection of and transition between the different combinations are preferably thus enabled by activating policy controls that are integrated into the Service Level Agreement management so as to maintain the user-perceived QoS while achieving efficient resource utilisation. This enables service and QoS differentiation and therefore new service selling points varying in charging rate and the service accessibility. This is achieved by utilising different resource management policies.

Preferably the network complies with the Universal Mobile Telecommunications System UMTS standard, the uplink/downlink channel combination selected being one of RACH/FACH, CPCH/FACH, DCH/DSCH or DCH/DCH.

The present invention also provides corresponding methods of switching between channel combinations, and a corresponding telecommunications network.

The present invention also provides a method of switching from a first uplink/downlink channel combination to a second uplink/downlink channel combination during a call connection in a telecommunications network involving transmission of data packets, data for transmission being buffered so as to be output in a controlled manner as data packets, the second channel combination being selected dependent upon a characteristic of the data stored in the buffer.

The present invention also provides a telecommunications network comprising a channel combination selector and a buffer, the selector being operative to select an uplink and downlink channel combination for use in a call connection involving transmission of data packets, the buffer being operative to store data and output in a controlled manner the data as data packets for transmission, the selector being operative to select the channel combination dependent upon a characteristic of the data stored in the buffer.

Furthermore the selector is preferably a radio network controller. Furthermore, the radio network controller is preferably under the control of a radio access policy server.

Preferred embodiments of the present invention provide a resource management architecture and associated control mechanisms for linking the use of radio resources with the adaptive control and manipulation of the traffic behaviour which may vary drastically over time during one session with time.

### Brief Description of the Drawings

A preferred embodiment of the present invention will now be described by way of example and with reference to the drawings, in which:
Figure 1 is a diagrammatic illustration of the channel management architecture of a UMTS network,
Figure 2 is a diagrammatic illustration of linear traffic shaping, and
Figure 3 is a diagrammatic illustration of control procedures for a RACH/FACH to DCH/DCH channel transition.

### Detailed Description

Because transmissions in UMTS networks are typically bursty and dedicated channels are best suited to continuous constant bit rate traffic, the UMTS shared channels such as downlink shared channel DSCH, random access channel RACH, forward access channel FACH, and common packet channel CPCH, all handle bursty packet streams. The question then arises of how to make an efficient use of radio resources while meeting QoS requirements associated with the 4 traffic classes (background, interactive, streaming and conversational classes)defined by Third Generation Partnership Project 3GPP for UMTS terrestrial radio access networks UTRAN operating using frequency domain duplex FDD. The issue of how to efficiently manage bursty asymmetric traffic, which varies between being predominantly downlink to predominantly uplink, is addressed. In particular, use of shared channels (RACH, CPCH, FACH, DSCH), channel combinations (RACH/FACH, CPCH/FACH, DCH/DSCH, DCH/DCH) and transitions between channel combinations to provide packet services are analysed. After an analysis of which channel combinations, and which transitions should be supported with respect to QoS, a mechanism is proposed to control the traffic to fit into the transmission characteristics of the different radio channels. The traffic pattern is dynamically adapted and the appropriate channel combination and transitions in channel combinations are made to meet the QoS requirement.

### The Channels

UMTS networks use a heirarchy of channels: logical, transport, and physical. In this section, these are considered in turn below followed by multiplexing and UE limitation aspects of channel selection.

### Logical channels:

There are six types of Logical Channels:
1. BCCH Broadcast Control Channel
2. PCCH Paging Control Channel
3. CTCHCommon Traffic Channel
4. CCCH Common Control Channel
5. DCCH Dedicated Control Channel
6. DTCH Dedicated Traffic Channel

Communication between an application in UMTS network and an application in the UE via a logical channel is referred to as a logical connection. Since this report deals in particular with point-to-point packet services only DCCH and DTCH are dealt with in detail.

There is one unique logical connection per user terminal (user equipment UE) for radio resource control (i.e. a unique dedicated control channel DCCH) and one or several unique logical connections per UE for different general packet radio service GPRS sessions (i.e. one or several dedicated traffic channels DTCHs). There is one unique radio link control RLC connection for each logical channel. Logical channels are inherently two-way channels.

### Transport Channels:

There are several Transport Channels relevant to the support of DCCH and DTCH as shown in Table 1 below.

**Table 1**

| UPLINK ↑ | DOWNLINK ↓ |
|---|---|
| RACH (Shared) Random Access Channel | FACH (Shared) Forward Access Channel |
| CPCH (Shared) Common Packet Channel | DSCH (Shared) Downlink Shared Channel |
| DCH Dedicated Channel | DCH Dedicated Channel |

Logical channels to/from different UEs are multiplexed/de-multiplexed (scheduled in time) to/from transport shared channels.

Logical channels to/from the same UE may be multiplexed/de-multiplexed (scheduled in time) to/from transport dedicated channels.

### Physical Channels:

Table 2 below shows the physical channels pertinent to packet services and gives an indication of how channels can be mapped onto each other between logical to physical channels, as well as the range of raw packet size per frame. Many transport channels can be mapped to a single physical channel, which has its own control signalling headers.

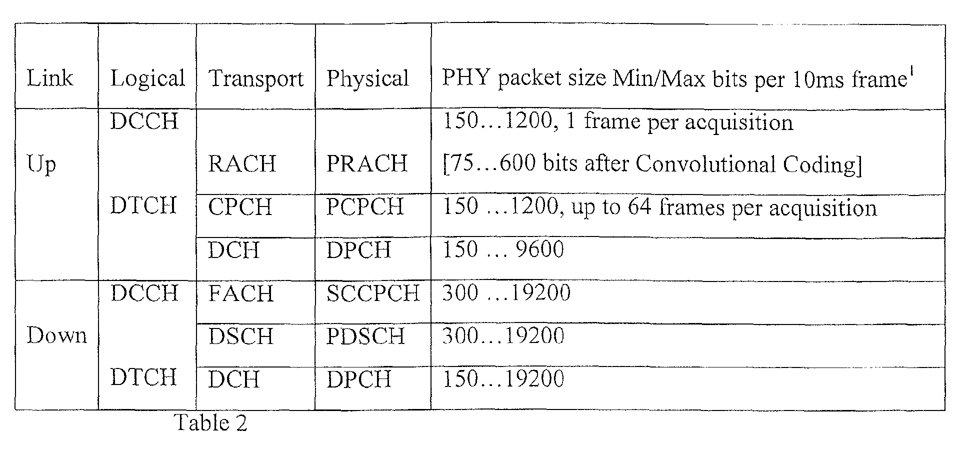

Transport channels to/from same UE are multiplexed/de-multiplexed (in time and code domain) to/from the physical channels.

### Possible Multiplexing of channels

Multiplexing mutiple logical channels on to a single transport channel may in many cases be more efficient than transport channel multiplexing. However, delays will be increased and delay variation will be increased due to use of logical channel multiplexing (generally delay variation is not an issue with respect to support of "background" or "interactive" service classes). Multiplexing of several DCHs to the same physical channel rather than different physical channels (i.e. different DPCHs) can lead to more efficient of resources but only with the confines of the fixed rate adaption schemes specified by standards. Also we need to consider that a UE may only support a limited number of simultaneous DCHs, DPCHs and PDSCHs.

### Effect of UE limitations on selecting channels

For a packet session, a UE is in one of the following states (it switches between these states under the control of the radio resource controller RRC)
1. CELL_FACH, in this state there are two separate sub-states
   i. RACH/FACH (mandatory)
   ii. CPCH/FACH (optional)
2. CELL_DCH, in this state possible channel combinations are
   i. DCH/DCH (mandatory) or
   ii. DCH/DSCH (optional) or
   iii. any number of i) and ii) (depending on the UE's capabilities).

In assigning channel combinations and managing transitions between these combinations, the UTRAN has to take account of the UE's limitations, i.e. a UE may not support CPCH or DSCH and may only support one DPDCH (and one CCTrCH) and limited number of DCHs. In order to maximise the possibilities of providing packet services to/from a UE, the UTRAN should support DTCH multiplexing/demultiplexing to/from DCH, and support DCH multiplexing/demultiplexing to/from DPDCH.

### Uplink/Downlink Channel Combinations

Packet services can be supported via up-link/down-link transport channel combinations. As shown in Table 3 below, a UE can code and decode any one of these channel pairs. DCCH and DTCH can both be mapped to RACH/FACH or can both be mapped to CPCH/FACH. Up-link DCCH and DTCH can be mapped to the same or different up-link DCHs. Down-link DCCH and DTCH can be mapped to the same down-link DCH or DSCH, to different DCHs, to different DSCHs or to DCH + DSCH.

**Table 3**

| Logical Channel | Transport Channel | Physical Channel |
|---|---|---|
| DCCH↑↓ + DTCH↑↓ | RACH↑/FACH↓ | PRACH↑/SCCPCH↓ |
| | CPCH↑/FACH↓ | PCPCH↑/SCCPCH↓ |
| | DCH↑/DSCH↓ | DPCH↑/PDSCH↓ |
| | DCH↑/DCH↓ | DPCH↑/DPCH↓ |

### RACH/FACH

The radio resource controller RRC Connection Request/Connection Setup occurs over the CCCH via RACH/FACH and assigning a DCCH over a RACH/FACH. So the RRC Connection Setup Complete and all Direct Transfer messages (signalling between UE and CN necessary to establish GPRS session) go over the DCCH via RACH/FACH. As a result of Direct Transfer messages exchanged, a radio access network application part RANAP message is sent to the radio network controller RNC requesting allocation of a radio bearer having specific QoS requirements. If the bit rate, burst rate etc is pretty low and latency can be high then the RNC sets up a DTCH via either the same or a separate RACH/FACH (Note: The RACH and FACH that we use for CCCH may be different from the one that we use for DTCH but the DCCH would need to be multiplexed along with the DTCH to a single RACH/FACH.). The channel combination possibilities are indicated in Table 4 below.

**Table 4**

| | | | |
|---|---|---|---|
| DCCH↑ | RACH | FACH | DCCH↓ |
| DTCH↑ | | | DTCH↓ |

### CPCH/FACH

CPCH can only be used by the UE in the CELL_FACH to comply with UMTS standards, so CPCH/DCH and CPCH/DSCH are not possible, because use of DCH or DSCH implies CELL_DCH state. CPCH is defined as a stand-alone transport channel (mapped to PCPCH) with its various physical channels such as DL-DPCCH, AP-AICH, CD/CA-ICH providing power control, acquisition indicator, collision detection and a channel assignment indicator. This means that the DCCH should initially be mapped onto RACH/FACH combination, the GPRS session establishment is via Direct Transfer on DCCH carried by RACH/FACH. CPCH isn't really paired with any other transport channel to realise a logical channel for user traffic (DTCH or DCCH). However various specifications (UMTS and "WCDMA For UMTS") indicate that to support acknowledged mode RLC the FACH is used to provide positive acknowledgements (Acks)(or negative acknowledgements NAcKs). DCCH can therefore be mapped to CPCH/FACH. Any data subsequently sent back by the network could be on the FACH (this includes RLC ACK/NAcK or data originating via an interface to a proxy server). The channel combination possibilities are indicated in Table 5 below.

**Table 5**

| | | | |
|---|---|---|---|
| DCCH↑ | CPCH | FACH | DCCH↓ |
| DTCH↑ | | | DTCH↓ |

### DCH/DCH

In Cell_DCH state, DTCH is mapped to one DCH/DCH combination and DCCH is mapped to another DCH combination or to the same DCH/DCH combination (via MAC multiplexing) or DCCH is mapped to DCH/DCH and DTCH is mapped to DCH/DSCH (or vice versa) The channel combination possibilities are indicated in Table 6 below.

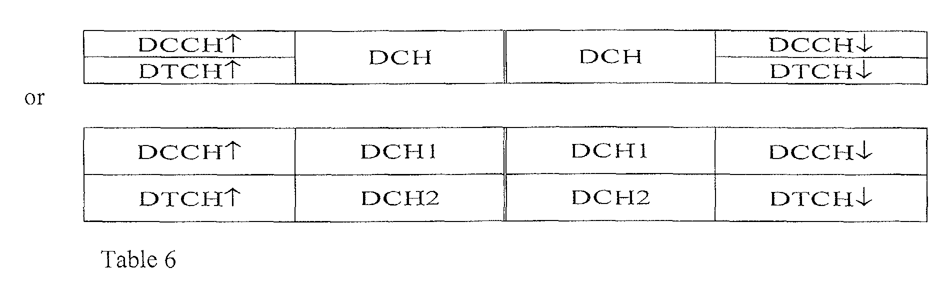

### DCH/DSCH

In Cell_DCH state DCCH and DTCH can both be mapped to- one DCH/DSCH, separate DCH/DSCHs or DCCH can be mapped to DCH/DCH and DTCH can be mapped to DCH/DSCH (or vice versa).

Note: RACH/DSCH is an acceptable combination in UMTS standards, but DPCCH is used in conjunction with PDSCH for power control and DPCCH cannot be combined with PRACH in the uplink to comply with the standards.

The channel combination possibilities are indicated in Table 7 below.

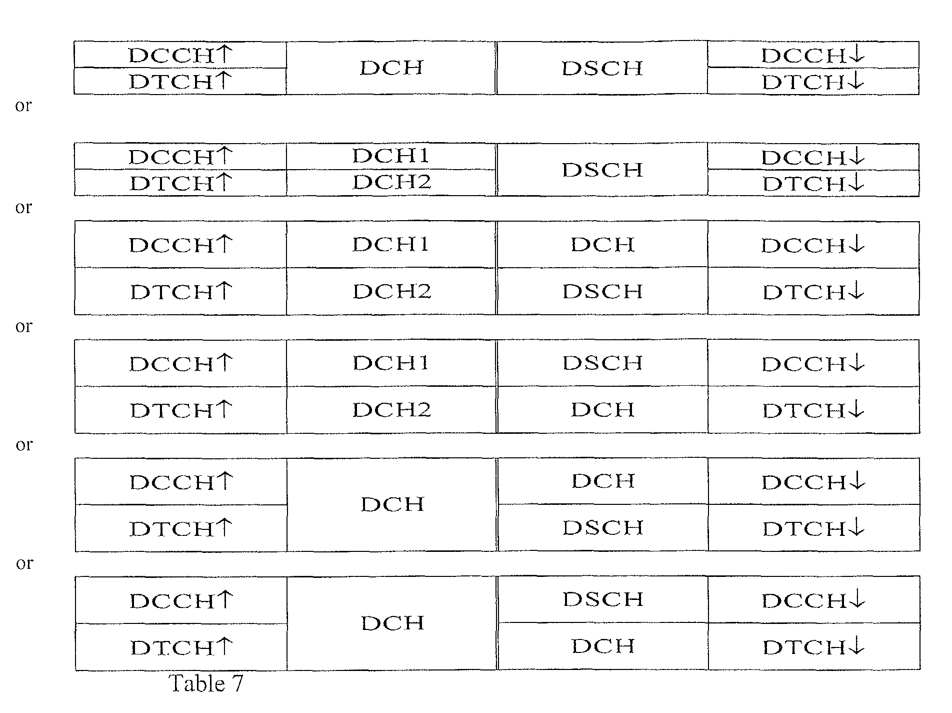

### Transitions between Channel combinations

Most packet services are bursty and asymmetric, i.e. there are periods where many packets are sent predominantly in one direction (usually down-link), periods of very low activity and periods where packets are sent predominantly in the opposite direction. Transitions (i.e. changes) in the uplink/downlink channel combinations which are used then become appropriate. Various transitions are considered in turn below.

### RACH/FACH <-> DCH/DCH or DCH/DSCH

Here DCCH and DTCH are assigned initially to RACH/FACH. The DCCH and DTCH are transited from/to RACH/FACH to/from DCH/DCH or DCH/DSCH. The following example illustrates circumstances in which these transitions may occur. We suppose that a network server transfers user traffic to the UE when a period of high activity is indicated by user traffic being queued by the RNC for downlink transmission, and when a period of low activity is indicated by no information being so queued.

The general aim is to move to DCH/DCH (or DCH/DSCH) in periods of high activity and to RACH/FACH in periods of low activity. In periods of low activity the UE has either nothing to send or it sends TCP acknowledgements These TCP acknowledgements are sent via RACH/FACH (or CPCH/FACH) to the network server causing further information to be transferred down-link. Information is queued at the RNC upon further information being transferred and this causes the transition to DCH/DCH or DCH/DSCH.

### RACH/FACH <-> CPCH/FACH

Here the DCCH is assumed to be already established on RACH/FACH and the DTCH is to be established on the CPCH/FACH. The DCCH must also moved to CPCH/FACH.

### CPCH/FACH <-> DCH/DCH or DCH/DSCH

Here DCCH and DTCH are carried on CPCH/FACH and they are transited to/from DCH/DCH or DCH/DSCH (as for RACH/FACH <-> DCH/DCH or DCH/DSCH).

### DCH/DCH <-> DCH/DCH

Transitions between DCH/DCH and DCH/DCH (i.e. transitions of DTCH from one DCH/DCH to a different DCH/DCH) are envisaged to be due to an increase or decrease in traffic on an established DTCH and due to the fact that we have other DTCHs already established using separate DCH/DCH combinations. For example, we assume that the DCCH is on DCH1/DCH1, that DTCH1 is on DCH2/DCH2 and that DTCH2 is on DCH3/DCH3 and that following some period of inactivity that DTCH1 or DTCH2 is transitioned to DCH1/DCH1 (via MAC layer multiplexing). Transitions will generally result in reconfiguration of the transport channel and/or physical channel due to a need to change spreading factor, transport block size, maximum RLC frame size etc.

### DCH/DCH <-> DCH/DSCH

Here the DTCH is reconfigured to use DCH/DSCH and this results in a change in spreading factor for the up-link DCH, release of the down-link DCH and reconfiguration on the DTCH down-link to DSCH. This would occur when we have a DCCH and DTCH1 assigned to a DCH/DSCH and DTCH2 is moved to DCH/DSCH as a result of inactivity and moved back to DCH2/DCH2 as a result of increased activity.

### Channel Combination Selection Policies

There is a need to support all 4 UMTS traffic classes. Services do not uniquely map to one class and cannot be limited to one class and operators may wish to differentiate by supporting some services at higher QoS. Several services may also be multiplexed at higher layers in the UE and in the core network to the same logical connection in the UTRAN. The Random Access Bearer (i.e.channel) Assignment Request may therefore be populated with parameter values, which relate to several services.

An initial assessment or the relationship between traffic classes and possible transport channel combinations is given in Table 8 below.

**Table 8**

| Service Class (RAB Parameters andValues) | Suggested Transport Channel Combination Policies | Remarks |
|---|---|---|
| Traffic Class | | |
| Conversational | DCH/DCH | *Efficiency of using DCH*/*DSCH for pedestrian user needs further study* |
| Streaming | DCH/DCH | *Pedestrian user* |
| | DCH/DSCH | *For "interactive streaming*" *then as Interactive Class* |
| Interactive | as Background Class | *If UE has establish multiple sessions (multiple DTCHs)* |
| Background | RACH/FACH <-> DCH/DCH or DCH/DSCH CPCH/FACH <-> DCH/DCH or DCH/DSCH DCH/DCH <-> DCH/DCH or DCH/DSCH DCH/DSCH <-> DCH/DCH or DCH/DSCH | |

| Asymmetry | | |
|---|---|---|
| Symmetric | DCH/DCH | |
| Asymmetric, UL/DL | DCH/DCH or possibly DCH/DSCH or policies as already suggested for background class | |

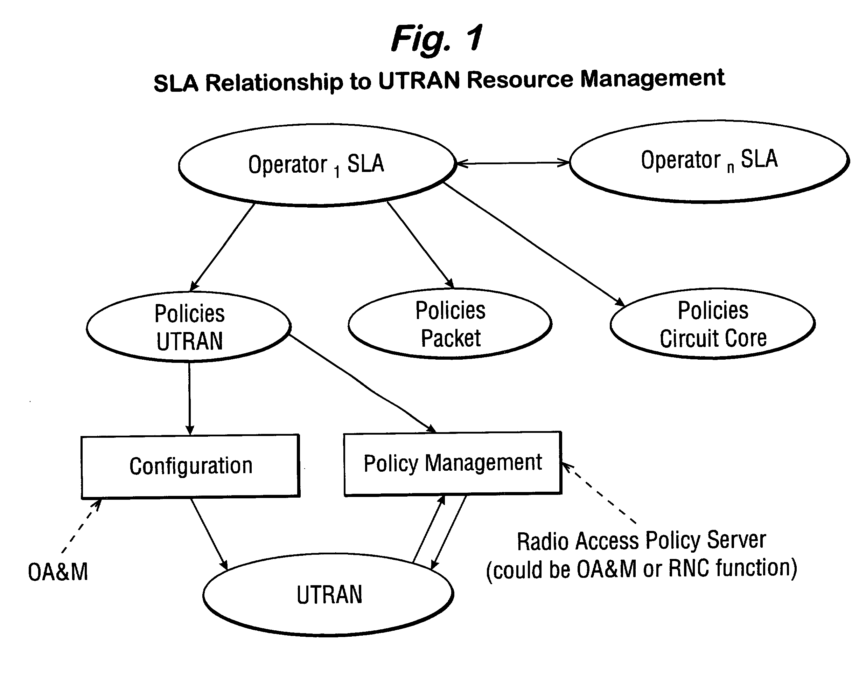

Operators have different business models and establish Service Level Agreements (SLAs) to meet them. SLAs define contracts between different operators and cover end-to-end QoS, security and charging. An SLA has to be translated into rules or policies specific to each network. This will mean specific policies related to QoS, security and charging for individual networks such as UTRAN (see Figure 1).

As regards selection of channel combinations, for example an operator may decide that the number of UEs supporting CPCH or DSCH will be insufficient to justify configuration of CPCH or DSCH channels. The operator therefore has a policy of using RACH, FACH and DCH only to provide packet services. To support such policies, the UTRAN must have the ability to configure one or more RACHs or FACHs per cell, the ability to configure CPCH, the ability to configure one or more DSCHs, and the ability to set thresholds to limit use of DCHs to provide "background" or "interactive" class.

In UTRAN, the RNC is responsible for interpreting RANAP messages (e.g. RAB Assignment Request) in a manner consistent with policies specified by the operator. Exceptional situations may arise, for example capacity available via a particular shared channel may not be available e.g. loading on FACH or DSCH is such that anticipated scheduling requirements are unlikely to be met. Such exceptions could be dealt with via a variety of further policies such as
(1) responding with a RAB Assignment Response indicating the reason why the radio bearer could not be assigned,
(2)releasing a radio bearer associated with a lower priority session of another UE,
(3) degrading QoS associated with other radio bearers,
(4) assigning a less optimal radio resource, e.g. assign a DCH,
(5) configuring an additional resources, e.g. additional FACH or DSCH.

These policies are realised via a process whereby the RNC seeks instruction regarding what to do from the Radio Access Policy Server as shown in Figure 1, whenever an exception is detected. The following is a set of functions in the RNC to support such policies:
- ability to release one or more radio bearers associated with a UE (or set of UEs) -this is needed to realise (2)above
- ability to lower power levels used with respect to one or more bearers associated with a UE (or set of UEs) (Note: this will have the effect of increasing bit error rates and may increase delays due to automatic repeat request ARQ procedures) - this is needed to realise (3)above
- Ability to use alternative (less optimal) resource, e.g. DCH/DCH - this is needed to realise (4)above
- Ability to configure additional resources, e.g. additional RACH, FACH, DSCH - this is needed to realise (5) above.

### Traffic Management

As mentioned previously, user traffic may be of one or several QoS classes, each type of which may features different generation and arrival behaviour through the network. This can lead to some difficulties in deciding which channel combinations should be used and if and when channel combination transitions should be allowed.

Traffic of constant bit rates is relatively easy to handle due to its consistent behaviour. Therefore, in that case dedicated channels are deployed with appropriated configurations and no transitions during the active time of a session.

Traffic of variable bit rates or burstiness, however, gives rise to difficulties in deciding what channel combinations should be used and if and when channel combination transitions should be made. As an example, a typical World Wide Web browsing operation involving the random access to different web servers leads to the variations in the transmission bit rates and the occupancy of the channels, especially when the user clicks the button to trigger the downloading the web page content and when he is reading a web page content which leaves the channel unused. Because the channel selection and configuration are set up prior to the use of session, the reconfiguration and even switching of one type of channel combination to another is often prohibited due to the delay (latency) incurred during the reconfiguration and transition between channel transitions. The fundamental constraints on the possibility of performing the channel reconfiguration and transition are the QoS requirements in combination of the availability and cost of the radio resources.

As a general principle, when a channel is not being used, i.e, the traffic is not arriving, some channel combination transitions are appropriate such as moving from DCH/DCH DCH/DSCH which are capable of supporting high bit rates with relative stable bit rates to FACH/RACH and CPCH/FACH which are better suited for low bit rates but bursty traffic. However the time or the delay during the transition should be considered before such transition takes place so as to not to violate the QoS constraints.

So as to adapt to the capacity and the characteristics of different channel combinations and their transitions and because of usually long delay and control complexity in completing the channel combination and the transitions, instead of switching the channel combinations according to the arrival pattern of packet traffic which is usually difficult or even impossible to predict with necessary accuracy, the traffic behaviour is disciplined or shaped so that its arrival characteristics can be fit into certain know patterns which are then used to select the appropriate channels combinations and/or transitions. The traffic management processes consist of:

### Traffic shaping

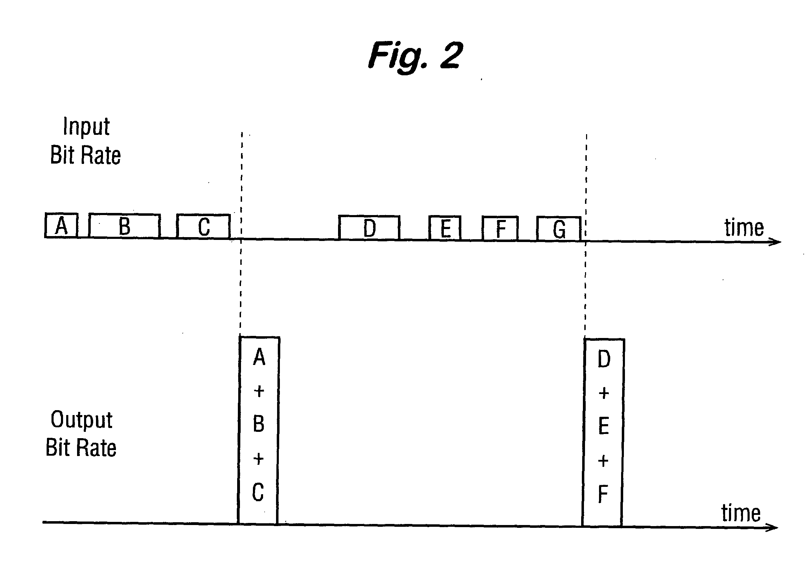

Traffic shaping is the operation that changes or "tailors" the behaviour of either a single traffic stream or a traffic aggregate formed by multiplexing of multiple traffic streams. The tailored behaviour can be in various forms depending on the network configurations and the traffic management policies of each individual RAN such as UTRAN in UMTS. Two typical traffic-shaping schemes are:
- Linear Shaping:
   The intermittent traffic service data units SDUs (or packets) are buffered until a level that indicates the sufficient occupancy of the buffer is reached. Then the buffer is released by dispatching the data as packets out on an even time interval. This procedure is shown is Figure 2.
   Alternatively the buffer is released at an even time interval without using buffer occupancy as a trigger.
- Non-linear Traffic Shaping - Token Bucket Shaping:
   The buffer is always in a releasing state (i.e. outputting packets) until the tokens are used up. The intermittent traffic service data units SDUs or packets are buffered and then the first packet that is the very front of the queue is dispatched if and only if one or more tokens are available. The maximum bit rates for releasing the buffered packets is set to be no more than the pre-defined Peak Rate. The scheme for allocation of tokens depends on the particular implementation. As an example, the token can be allocated at an even time interval, i.e. a N number of tokens are credited to the queue at the end of each time interval T.

   In comparison with the Linear Traffic Shaping, non-linear traffic shaping allows certain burstiness of the traffic which may be vital to guarantee the delay and jitter requirements of some traffic streams or aggregates.

### Traffic Queueing Management

Traffic Queueing is the operation that manages the traffic that is currently being buffered before the release of the buffer. It aims to differentiate the importance of the packets that are being buffered and prioritises some packets due to their relative importance such as those that carry the most significant bit (MSB) in a compressed traffic streams. It may deploy some standard queueing schemes such as weighted fair queuing WFQ, first in first out FIFO and class based queuing CBQ.

### Traffic Dispatching

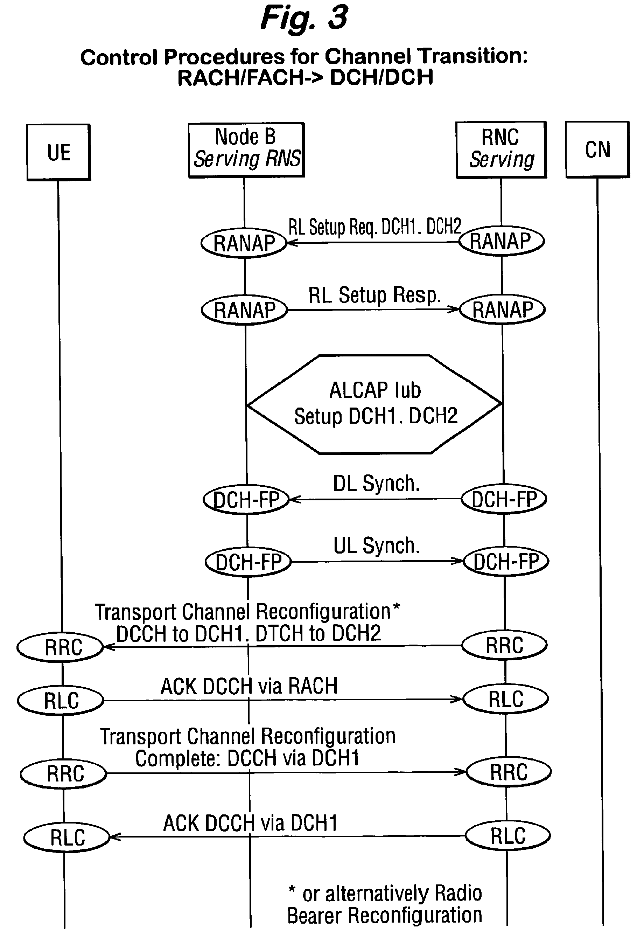

Traffic Dispatching relates to the output of packets from the queues and the transition between channel combinations. For example, after traffic shaping and queueing control, the channel combination of RACH/FACH transits to DCH/DCH due to the high bandwidth of the buffered traffic. An example control procedure is shown in Figure 3.

Traffic Dispatching may also involve the selection of the dispatching path (such as those related to the packet routing/switching) and processing related to security control such as packet filtering and attachment of encryption information.

## Claims

**1.** A method of selecting an uplink and downlink channel combination for use in a call connection in a telecommunications network involving transmission of data packets, data for transmission being stored in a buffer so as to be output in a controlled manner as data packets for transmission, the channel combination being selected dependent upon a characteristic of data stored in the buffer.

**2.** A method according to claim 1, in which the characteristic is the amount of data in the buffer.

**3.** A method according to claim 2, in which a combination of shared channels is selected when there is less than a threshold amount of data in the buffer.

**3.** A method according to claim 2 or claim 3, in which a combination of dedicated channels is selected when there is more than a threshold amount of data in the buffer.

**4.** A method according to any preceding claim, in which data is accumulated in the buffer until at least a threshold amount of data is accumulated then data is output at regular intervals by the buffer as data packets for transmission until the amount of data in the buffer becomes below a threshold.

**5.** A method according to any of claims 1 to 3, in which the buffer outputs at regular intervals any data accumulated as data packets for transmission.

**6.** A method according to any of claims 1 to 3, in which data is accumulated in the buffer, and data packets are output from the buffer for transmission upon sufficient credit being accrued, credit being allocated according to a predetermined rule.

**7.** A method according to any preceding claim, in which data of different quality of service classes are buffered separately so as to select a channel combination for transmission of data packets dependent upon quality of service class.

**8.** A method according to any preceding claim, in which the network complies with the Universal Mobile Telecommunications System UMTS standard, the uplink/downlink channel combination selected being one of RACH/FACH, CPCH/FACH, DCH/DSCH or DCH/DCH.

**9.** A method of switching from a first uplink/downlink channel combination to a second uplink/downlink channel combination during a call connection in a telecommunications network involving transmission of data packets, data for transmission being buffered so as to be output in a controlled manner as data packets, the second channel combination being selected dependent upon a characteristic of the data stored in the buffer.

**10.** A telecommunications network comprising a channel combination selector and a buffer, the selector being operative to select an uplink and downlink channel combination for use in a call connection involving transmission of data packets, the buffer being operative to store data and output in a controlled manner the data as data packets for transmission, the selector being operative to select the channel combination dependent upon a characteristic of the data stored in the buffer.
